# EUROPÄISCHE PATENTSCHRIFT

(11) **EP 0 519 212 B1**
(45) Veröffentlichungstag und Bekanntmachung des Hinweises auf die Patenterteilung: **14.12.1994**
(21) Anmeldenummer: 92108159.2
(22) Anmeldetag: 14.05.1992
(51) Int. Cl.: C04B 33/32, F27D 3/00

(54) **Verfahren zur Herstellung von Dachziegeln sowie nach diesem Verfahren hergestellte Dachziegel**
Roofing tiles and process for their production
Tuiles et procédé pour leur fabrication

(30) Priorität: 19.06.1991 DE 4120264
(43) Veröffentlichungstag der Anmeldung: 23.12.1992
(73) Patentinhaber: Ceric Anlagenbau GmbH, D-85635 Höhenkirchen-Siegertbrn (DE)
(72) Erfinder: Plank, Hubert, W-8011 Höhenkirchen-Siegertsbrunn (DE)
(74) Vertreter: Tetzner, Volkmar, Dr.-Ing. Dr. jur.

(56) Entgegenhaltungen:
- EP-A- 0 162 153
- DE-A- 2 132 274
- DE-A- 3 719 506
- GB-A- 2 018 962

## Beschreibung

Die Erfindung betrifft ein Verfahren zur Herstellung von Dachziegeln, die an ihrer Unterseite wenigstens einen Halterungsvorsprung zur Festlegung des Dachziegels an einem dachseitigen Ziegelträger aufweisen, wobei zunächst ein Dachziegel-Rohling geformt und dieser Rohling dann in einem Rollenofen gebrannt wird.

Es sind im wesentlichen drei Verfahren zur wirtschaftlichen Herstellung von Dachziegeln bekannt.

Beim U-Kassetten-Brand werden die Dachziegel in einem Tunnelofen gebrannt. Dabei werden auf den Tunnelofen-Wagen U-Kassetten gesetzt, die die zu brennenden Dachziegel entweder senkrecht oder waagerecht aufnehmen. Abgesehen von der sehr langen Brenndauer wird mit diesem Verfahren nicht die heute geforderte Formgenauigkeit der Dachziegel errreicht.

Beim modernen H-Kassetten-Brand durchlaufen die flach in Kassetten mit H-Form eingelegten Dachziegel in wesentlich kürzerer Zeit den Brennvorgang.

Beim Brennen von Dachziegeln auf Trägerplatten in Rollen- oder Tunnelöfen sind die Dachziegel während des Brennens entweder senkrecht oder waagerecht auf den Trägerplatten angeordnet. Die Brenndauer ist bei diesem Verfahren noch weiter reduziert.

DE-A-2 132 274 beschreibt ein Verfahren zur Herstellung von Dachziegeln, wobei die getrockneten Formlinge auf entsprechend ihrer Unterseite profilierten Auflageflächen bis zur vollen Sinterung gebrannt werden. Diese Schrift hat als Ziel die Verbesserung der Maßgenauigkeit.

Alle drei bekannten Verfahren zur Herstellung von Dachziegeln sind jedoch mit dem Nachteil behaftet, daß ein beachtlicher maschineller Aufwand erforderlich ist, die zu brennenden Dachziegel auf den Tunnelofenwagen und/oder auf die Brennhilfsmittel (U-Kassetten, H-Kassetten oder Trägerplatten) zu laden und später wieder abzuladen. Weiterhin haben diese Anlagen einen sehr großen Grundflächenbedarf. Zum Trocknen und Brennen der Dachziegel ist ferner ein hoher Energieaufwand erforderlich.

Der Erfindung liegt daher die Aufgabe zugrunde, ein Verfahren der im Oberbegriff des Anspruches 1 vorausgesetzten Art so auszubilden, daß eine hohe Qualität der Dachziegel erreicht wird, eine gute Flexibilität der Produktion erzielt wird und ein kleiner Investitionsbedarf gegeben ist.

Diese Aufgabe wird erfindungsgemäß durch folgende Verfahrensschritte gelöst:
- zum Brennen wird der Rohling unmittelbar mit seiner Unterseite auf die Rollen des Brennofens aufgelegt;
- hierzu findet ein Rohling Verwendung, dessen Unterseite wenigstens ein Auflageelement aufweist, dessen Höhe mindestens so groß wie die Höhe des Halterungsvorsprunges ist und dessen Auflagelänge so bemessen ist, daß der Rohling bei seiner Bewegung durch den Rollenofen kippfrei auf den Rollen aufliegt.

Zweckmäßige Ausgestaltungen des erfindungsgemäßen Verfahrens sowie der zum Brennen in einem Rollenofen bestimmten Dachziegel-Rohlinge sind Gegenstand der Ansprüche 2 bis 11.

Da bei dem erfindungsgemäßen Verfahren der Dachziegel-Rohling zur Durchführung des Brennvorganges unmittelbar auf die Rollen des Rollenofens aufgelegt wird, entfällt die Notwendigkeit, kostspielige Brennhilfsmittel, wie beispielsweise H-Kassetten, einsetzen zu müssen. Das unmittelbare Auflegen der Dachziegel-Rohlinge auf die Rollen des Rollenofens vereinfacht auch wesentlich die Beschickung des Ofens mit dem zu brennenden Gut.

Vorteilhaft im Vergleich zum eingangs geschilderten Stand der Technik ist weiterhin, daß die großen und aufwendigen Tunnelöfen mit ihrem umfangreichen Wagenpark durch wesentlich kleinere und flexible Rollenöfen ersetzt werden können.

Günstig ist ferner die für die Qualität der Dachziegel sehr wesentliche und bei dem erfindungsgemäßen Verfahren im Vergleich zum Stand der Technik besonders gleichmäßige Temperaturverteilung in dem unmittelbar (ohne Brennhilfsmittel) mit dem Brenngut beschickten Rollenofen. Die Brenndauer läßt sich durch das erfindungsgemäße Verfahren im Vergleich zum geschilderten Stand der Technik wesentlich verkürzen.

Da bei dem erfindungsgemäßen Verfahren der Dachziegel-Rohling nur mit dem auf seiner Unterseite vorgesehenen Auflageelement die Rollen des Rollenofens berührt, nicht jedoch - wie bei den bisherigen Verfahren - auf gesonderten Brennhilfsmitteln aufliegt, ergibt sich beim Brennvorgang eine wesentlich verbesserte Oberflächenqualität der Dachziegel.

Da die Höhe des Auflageelementes wenigstens der Höhe des Halterungsvorsprungs entspricht, sind bei geeigneter Bemessung der Auflagelänge des Auflageelementes Beschädigungen des Dachziegel-Rohlings beim Brennvorgang, insbesondere beim Be- und Entladen des Rollenofens, praktisch ausgeschlossen. Damit wird auch verhindert, daß der Dachziegel-Rohling beim Durchlaufen des Tunnelofens Einwirkungen ausgesetzt ist, die seine Maß- und Formgenauigkeit beeinträchtigen könnten.

Einige Ausführungsbeispiele der Erfindung sind in der Zeichnung veranschaulicht. Es zeigen
- Fig.1: einen Längsschnit (längs der Linie I-I der Fig.2) eines durch einen Rollenofen transportierten Dachziegel-Rohlings, wobei die Rollen des Rollenofens gestrichelt dargestellt sind;
- Fig.2: einen Querschnitt durch den Rohling längs der Linie II-II in Fig.1;
- Fig.3: einen Längsschnitt durch zwei an dachseitigen Ziegelträgern festgelegte Dachziegel nach Fig.1;
- Fig.4: einen Längsschnitt durch ein weiteres Ausführungsbeispiel eines durch einen Rollenofen transportierten Dachziegels, wobei die Rollen des Rollenofens gestrichelt dargestellt sind;
- Fig.5: einen Längsschnitt durch zwei an dachseitigen Ziegelträgern festgelegte Dachziegel nach Fig.4;
- Fig.6: einen Querschnitt durch ein weiteres Ausführungsbeispiel der Erfindung;
- Fig.7 bis 10: Schnitte durch zwei weitere Ausführungsbeispiele der Erfindung.

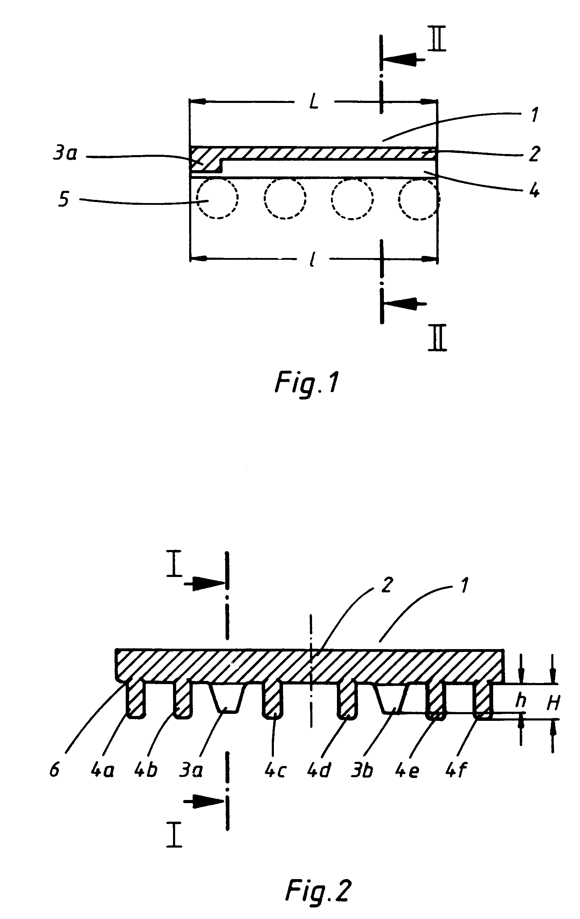

Fig.1 bis 3 zeigen ein Ausführungsbeispiel eines zur Herstellung eines erfindungsgemäßen Dachziegels geeigneten Dachziegel-Rohlings 1 mit einem Ziegelkörper 2 (beispielsweise in Biberform). An der Unterseite des Ziegelkörpers 2 sind zwei Halterungsvorsprünge 3a und 3b ausgebildet, die in üblicher Weise die Form von Nasen besitzen und zur Festlegung des fertigen Dachziegels an einem dachseitigen Ziegelträger 7 (beispielsweise einer üblichen Dachlatte) bestimmt sind.

Weiterhin sind an der Unterseite des Ziegelkörpers 2 eine Anzahl von rippenförmigen Auflageelementen 4a bis 4f vorgesehen, deren Länge l der Länge L des Dachziegel-Rohlings entspricht (vgl. Fig.1). Beim dargestellten Ausführungsbeispiel sind insgesamt sechs solche Auflageelemente 4a bis 4f vorgesehen. Sie sind mit Abstand voneinander in etwa gleichmäßiger Teilung angeordnet. Die Auflageelemente 4a bis 4f sind ebenso wie die Halterungsvorsprünge 3a und 3b einstückig mit dem Ziegelkörper 2 ausgebildet.

Die Höhe H der Auflageelemente 4a bis 4f ist größer als die Höhe h der Halterungsvorsprünge 3a und 3b. Bei dem in Fig.1 und 2 dargestellten Ausführungsbeispiel berühren daher nur die Auflageelemente 4a bis 4f die Rollen 5 des mit dem Brenngut beschickten Rollenofens.

An der Basis der Auflageelemente 4a bis 4f sind weiterhin in Form von Einkerbungen ausgebildete Sollbruchstellen 6 vorgesehen, die der vereinfachten Abtrennung der Auflageelemente 4a bis 4f vom Ziegelkörper 2 dienen.

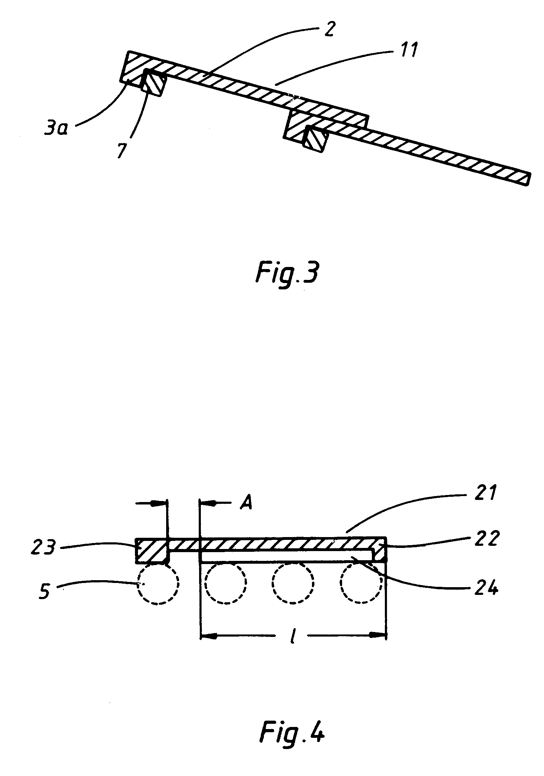

Fig.3 zeigt schematisch zwei an dachseitigen Ziegelträgern 7 festgelegte fertige Dachziegel 11. Ein solcher Dachziegel 11 unterscheidet sich vom Dachziegel-Rohling 1 durch das Fehlen der Auflageelemente 4a bis 4f, die nach dem Brennen entfernt werden.

Beim erfindungsgemäßen Verfahren zum Herstellen von Dachziegeln wird zunächst der Dachziegel-Rohling 1 geformt und so in den Rollenofen eingeführt, daß die Auflageelemente 4a bis 4f auf den Rollen 5 aufliegen.

Während des Transportes der Rohlinge 1 berühren ausschließlich die gleichmäßig angeordneten Auflageelemente 4a bis 4f die Rollen 5 des Rollenofens, wodurch Beschädigungen und andere Beeinträchtigungen der Maß- und Formgenauigkeit des Dachziegel-Rohlings 1 praktisch ausgeschlossen sind.

Nach dem Brennen werden die Auflageelemente 4a bis 4f an den Sollbruchstellen 6 vom übrigen Materialbereich des Dachziegel-Rohlings 1 entfernt.

Im Rahmen der Erfindung kann die Höhe h der Halterungsvorsprünge 3a und 3b gewünschtenfalls auch der Höhe H der Auflageelemente entsprechen, wodurch sich die Auflagefläche des Dachziegel-Rohlings 1 auf den Rollen 5 des Rollenofens erhöht.

Weitere Variationen des in den Fig.1 bis 3 dargestellten Ausführungsbeispiels, beispielsweise durch Veränderung der Anzahl und Dimensionierung der Halterungsvorsprünge und der Auflageelemente oder durch besondere Gestaltung der Sollbruchstellen, sind gleichfalls Gegenstand der Erfindung.

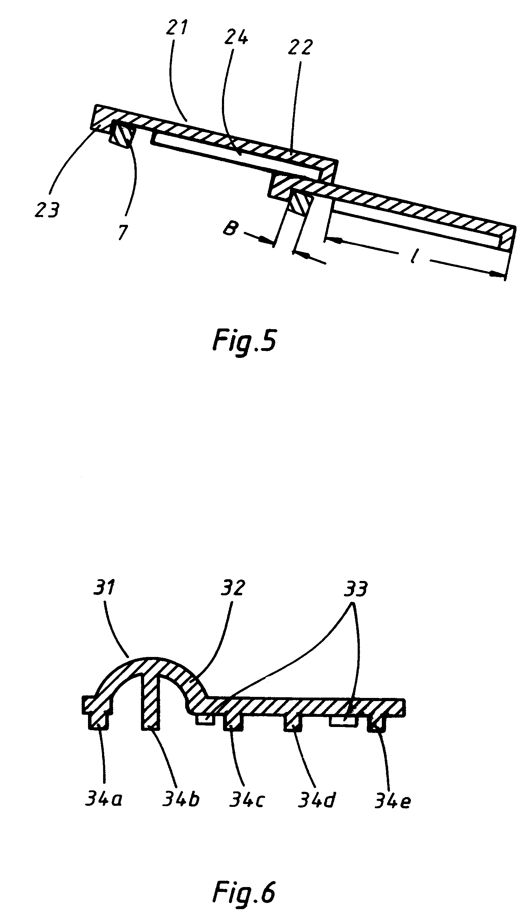

Fig 4 und 5 zeigen ein weiteres Ausführungsbeispiel eines Dachziegel-Rohlings 21 mit einem Ziegelkörper 22 und einem nasenartigen Halterungsvorsprung 23. Die Auflageelemente 24 erstrecken sich bei diesem Ausführungsbeispiel nicht über die gesamte Länge L des Ziegelkörpers, sondern enden mit Abstand A gegenüber dem Halterungsvorsprung 23. Die Länge l der Auflageelemente 24 ist so bemessen, daß der Dachziegel-Rohling kippfrei über die Rollen 5 des Rollenofens läuft. Weiterhin ist der Abstand A zwischen den Auflageelementen 24 und dem Halterungsvorsprung 23 größer als die Breite B des Ziegelträgers 7 (vgl. Fig.5).

Beim erfindungsgemäßen Verfahren zur Herstellung des Dachziegels nach Fig.4 werden die Auflageelemente 24 nach dem Brennen des Rohlings 21 nicht vom restlichen Materialbereich abgetrennt, sondern verbleiben am Ziegelkörper 22. Durch geeignete Bemessung des Abstandes A zwischen Halterungsvorsprung 23 und den Auflageelementen 24 kann der Dachziegel-Rohling 21 (mit den daran befindlichen Auflageelementen 24) an einem dachseitigen Ziegelträger 7 festgelegt werden.

Fig. 6 veranschaulicht eine weitere Ausführungsform eines zur Herstellung eines erfindungsgemäßen Dachziegels geeigneten Dachziegel-Rohlings 31. Er enthält einen Ziegelkörper 32 in stark profilierter Form, der beispielsweise im Pressverfahren hergestellt wird. An der Unterseite des Ziegelkörpers 32 sind eine Anzahl von rippenförmigen Auflageelementen 34a bis 34e vorgesehen, die sich über einen wesentlichen Teil der Länge L des Ziegelkörpers (senkrecht zur Zeichenebene der Fig.6) erstrecken. Beim dargestellten Ausführungsbeispiel sind insgesamt fünf solche Auflageelemente 34a bis 34d vorgesehen. Sie sind mit Abstand voneinander in etwa gleichmäßiger Teilung angeordnet. Die Auflageelemente 34a bis 34e sind einstückig mit dem Ziegelkörper 32 ausgebildet.

Die Höhe H der einzelnen Auflageelemente 34a bis 34e ist so gewählt, daß sämtliche Auflageelemente die Rollen 5 des mit dem Brenngut beschickten Rollenofens berühren.

Nach dem Brennen werden die Auflageelemente 34a bis 34e der Rohlings 31 wie bei dem Ausführungsbeispiel der Fig.1 bis 3 entfernt.

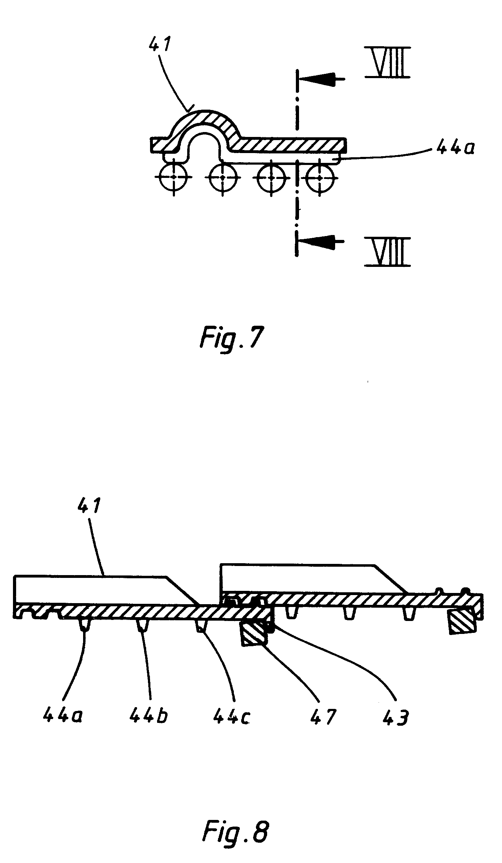

Bei dem in den Fig.7 und 8 dargestellten weiteren Ausführungsbeispiel sind die Auflageelemente 44a, 44b, 44c des durch Pressen hergestellten Rohlings 41 nicht - wie bei den Ausführungsbeispielen der Fig.1 bis 6 - in Wasserlaufrichtung (zugleich Produktionsrichtung) des Dachziegels, sondern quer zur Wasserlaufrichtung angeordnet, wobei diese Auflageelemente nach dem Brennen nicht entfernt werden müssen. Das dem Halterungsvorsprung 43 benachbarte Auflageelement 44c ist in einem hinreichenden Abstand vom Halterungsvorsprung 43 angeordnet, so daß der Ziegelträger 47 dazwischen Aufnahme findet.

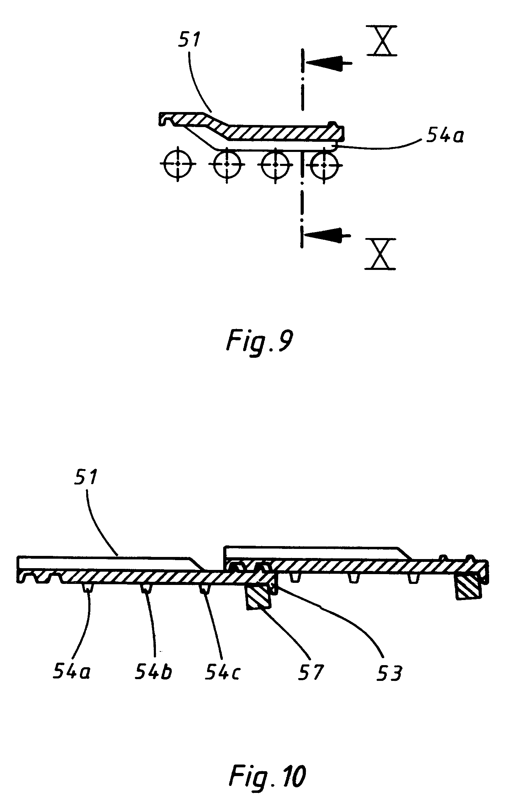

In ähnlicher Weise sind auch bei dem in den Fig.9 und 10 veranschaulichten Ausführungsbeispiel die Auflageelemente 54a, 54b, 54c in Querrichtung zur Wasserlaufrichtung des Dachziegels angeordnet und werden nach dem Brennen des Rohlings 51 nicht entfernt. Auch hierbei besitzt das Auflageelement 54c einen hinreichenden Abstand vom Halterungsvorsprung 53, so daß der Ziegelträger 57 dazwischengreifen kann.

Die als Auflageelemente vorgesehenen Rippen können im Rahmen der Erfindung auch diagonal, schräg, netzförmig oder kreisförmig ausgebildet sein. Ferner sind vollkommen unregelmäßig gestaltete Auflageelemente denkbar, die teils nach dem Brennen abgetrennt werden, teils am Ziegelkörper verbleiben.

## Patentansprüche

1. Verfahren zur Herstellung von Dachziegeln, die an ihrer Unterseite wenigstens einen Halterungsvorsprung (3; 23; 33; 43; 53) zur Festlegung des Dachziegels an einem dachseitigen Ziegelträger (7; 47; 57) aufweisen, wobei
a) zunächst ein Dachziegel-Rohling (1; 21; 31; 41; 51) geformt und
b) dieser Rohling dann in einem Rollenofen gebrannt wird,
gekennzeichnet durch folgende Verfahrensschritte:
c) zum Brennen wird der Rohling unmittelbar mit seiner Unterseite auf die Rollen (5) des Brennofens aufgelegt;
d) hierzu findet ein Rohling Verwendung, dessen Unterseite wenigstens ein Auflage-element (4; 24; 34; 44a-c; 54a-c) aufweist, dessen Höhe (H) mindestens so groß wie die Höhe (h) des Halterungsvorsprunges ist und dessen Auflagelänge (l) so bemessen ist, daß der Rohling bei seiner Bewegung durch den Rollenofen kippfrei auf den Rollen (5) aufliegt.

2. Verfahren nach Anspruch 1, dadurch gekennzeichnet, daß das Auflageelement (4; 34) nach dem Brennen zumindest teilweise entfernt wird.

3. Zum Brennen in einem Rollenofen bestimmter Dachziegel-Rohling (1; 21; 31; 41; 51), der an seiner Unterseite wenigstens einen Halterungsvorsprung (3; 23; 33; 43; 53) zur Festlegung des fertigen Dachziegels an einem dachseitigen Ziegelträger (7; 47; 57) aufweist, gekennzeichnet durch wenigstens ein an der Unterseite des Rohlings vorgesehenes Auflageelement (4; 24; 34; 44a-c; 54a-c), dessen Höhe (H) mindestens so groß wie die Höhe des Halterungsvorsprunges (h) ist und dessen Auflagelänge (l) so bemessen ist, daß der Rohling bei seiner Bewegung durch den Rollenofen kippfrei auf den Rollen (5) aufliegt.

4. Rohling nach Anspruch 3, dadurch gekennzeichnet, daß die Höhe (H) des Auflageelementes größer als die Höhe (h) des Halterungsvorsprunges ist.

5. Rohling nach Anspruch 3, dadurch gekennzeichnet, daß als Auflageelemente (4; 24; 34; 44a-c; 54a-c) eine Anzahl von Rippen gleicher Höhe vorgesehen sind.

6. Rohling nach Anspruch 3, dadurch gekennzeichnet, daß das Auflageelement (4; 24; 34; 44a-c; 54a-c) einstückig mit dem übrigen Materialbereich des Rohlings (1; 21; 31; 41; 51) ausgebildet ist.

7. Rohling nach Anspruch 6, dadurch gekennzeichnet, daß das Auflageelement (4; 34) als ein vom gebrannten Rohling abtrennbarer Teil ausgebildet ist.

8. Rohling nach Anspruch 7, dadurch gekennzeichnet, daß der Rohling (1; 31) an der Basis des Auflageelementes (4; 34) mit einer Sollbruchstelle (6) zum Entfernen des Auflageelementes nach dem Brennen versehen ist.

9. Rohling nach Anspruch 3, dadurch gekennzeichnet, daß das Auflageelement (24; 44a-c; 54a-c) als ein am fertigen Dachziegel verbleibender Bestandteil ausgebildet ist.

10. Rohling nach Anspruch 9, dadurch gekennzeichnet, daß das Auflageelement (24) in Wasserlaufrichtung des Dachziegels verläuft und eine Länge (l) besitzt, die geringer als die Gesamtlänge (L) des Dachziegels ist, wobei das Auflageelement (24) mit Abstand (A) vom Halterungsvorsprung (23) endet.

11. Rohling nach Anspruch 9, dadurch gekennzeichnet, daß das Auflageelement (44a-c; 54a-c) quer zur Wasserlaufrichtung des Dachziegels verläuft und mit Abstand vom Halterungsvorsprung (43; 53) angeordnet ist.

## Claims

1. Method of producing roof tiles which have on their underside at least one mounting projection (3; 23; 33; 43; 53) for fixing the roof tile on a tile support (7; 47; 57) on the roof, wherein
a) first of all a roof tile blank (1; 21; 31; 41; 51) is formed
b) and this blank is then fired in a roller kiln,
characterised by the following method steps:
c) for firing the blank is placed directly with its underside on the rollers (5) of the firing kiln;
d) for this a blank is used in which the underside has at least one supporting element (4; 24; 34; 44a-c; 54a-c), the height (H) of which is at least as great as the height (h) of the mounting projection and the supporting length (l) of which is such that as the blank moves through the roller kiln it rests without tilting on the rollers (5).

2. Method as claimed in Claim 1, characterised in that the supporting element (4; 34) is at least partially removed after firing.

3. Roof tile blank (1; 21; 31; 41; 51) which is intended for firing in a roller kiln and which has on its underside at least one mounting projection (3; 23; 33; 43; 53) for fixing the finished roof tile on a tile support (7; 47; 57) on a roof, characterised by the provision on the underside of the blank of at least one supporting element (4; 24; 34; 44a-c; 54a-c), the height (H) of which is at least as great as the height (h) of the mounting projection and the supporting length (l) of which is such that as the blank moves through the roller kiln it rests without tilting on the rollers (5).

4. Blank as claimed in Claim 3, characterised in that the height (H) of the supporting element is greater than the height (h) of the mounting projection.

5. Blank as claimed in Claim 3, characterised in that a plurality of ribs of the equal height are provided as supporting elements (4; 24; 34; 44a-c; 54a-c).

6. Blank as claimed in Claim 3, characterised in that the supporting element (4; 24; 34; 44a-c; 54a-c) is constructed integrally with the remaining material region of the blank (1; 21; 31; 41; 51).

7. Blank as claimed in Claim 6, characterised in that the supporting element (4; 34) is constructed as a part which can be separated from the fired blank.

8. Blank as claimed in Claim 7, characterised in that the blank (1; 31) is provided on the base of the supporting element (4; 34) with a predetermined breaking point (6) for removal of the supporting element after firing.

9. Blank as claimed in Claim 3, characterised in that the supporting element (24; 44a-c; 54a-c) is constructed as a component which remains on the finished roof tile.

10. Blank as claimed in Claim 9, characterised in that the supporting element (24) extends in the direction of water flow of the roof tile and has a length (l) which is less than the overall length (L) of the roof tile, the supporting element (24) ending at a distance (A) from the mounting projection (23).

11. Blank as claimed in Claim 9, characterised in that the supporting element (44a-c; 54a-c) extends transversely with respect to the direction of water flow of the roof tile and is disposed at a distance from the mounting projection (43; 53).

## Revendications

1. Procédé de production de tuiles qui comportent sur le côté inférieur au moins une protubérance (3 ; 23 ; 33 ; 43 ; 53) de fixation de la tuile à un support (7 ; 47; 57) faisant partie du toit, suivant lequel
a) une galette de tuile (1 ; 21 ; 31 ; 41 ; 51) étant tout d'abord réalisée par moulage et
b) cette galette étant ensuite soumise à cuisson dans un four à rouleaux de transport,
caractérisé par les étapes suivantes :
c) la galette est posée directement par le côté inférieur sur les rouleaux (5) du four pour la cuisson ;
d) une galette qui est utilisée à cette fin comprend sur le côté inférieur au moins un élément d'appui (4 ; 24 ; 34 ; 44a-c ; 54a-c) dont la hauteur (H) est au moins aussi grande que la hauteur (h) de la protubérance de fixation et dont la longueur d'appui (1) est dimensionnée de manière que la galette repose sans basculer sur les rouleaux (5) lors de son mouvement dans le four.

2. Procédé selon la revendication 1, caractérisé en ce que l'élément d'appui (4 ; 34) est enlevé au moins partiellement après la cuisson.

3. Galette de tuile (1 ; 21 ; 31 ; 41 ; 51) destinée à subir la cuisson dans un four à rouleaux de transport et comprenant sur le côté inférieur au moins une protubérance (3 ; 23 ; 33 ; 43 ; 53) de fixation de la tuile achevée sur un support (7 ; 47 ; 57) côté toit, caractérisée par au moins un élément d'appui (4 ; 24 ; 34 ; 44a-c ; 54a-c) qui est prévu sur le côté inférieur de la galette, dont la hauteur (H) est au moins aussi grande que la hauteur de la protubérance de fixation (h) et dont la longueur d'appui (l) est dimensionnée de manière que la galette repose sur les rouleaux (5) sans basculer lors de son mouvement dans le four à rouleaux de transport.

4. Galette selon la revendication 3, caractérisée en ce que la hauteur (H) de l'élément d'appui est supérieure à la hauteur (h) de la protubérance de fixation.

5. Galette selon la revendication 3, caractérisée en ce que plusieurs nervures de hauteur constante sont prévues en éléments d'appui (4 ; 24 ; 34 ; 44a-c ; 54a-c).

6. Galette selon la revendication 3, caractérisée en ce que l'élément d'appui (4 ; 24 ; 34 ; 44a-c ; 54a-c) est monobloc avec le reste de la matière de la galette (1 ; 21 ; 31 ; 41 ; 51).

7. Galette selon la revendication 6, caractérisée en ce que l'élément d'appui (4 ; 34) est constitué d'un élément séparable de la galette ayant subi la cuisson.

8. Galette selon la revendication 7, caractérisée en ce que la galette (1 ; 31) comporte à la base de l'élément d'appui (4 ; 34) un lieu (6) destiné à la rupture pour l'enlèvement de l'élément d'appui à la fin de la cuisson.

9. Galette selon la revendication 3, caractérisée en ce que l'élément d'appui (24 ; 44a-c ; 54a-c) est conformé en élément demeurant sur la tuile achevée.

10. Galette selon la revendication 9, caractérisée en ce que l'élément d'appui (24) est orienté dans le sens de l'écoulement de l'eau sur la tuile et il a une longueur (l) qui est inférieure à la longueur totale (L) de la tuile, l'élément d'appui (24) s'achevant à distance (A) de la protubérance de fixation (23).

11. Galette selon la revendication 9, caractérisée en ce que l'élément d'appui (44a-c ; 54a-c) est orienté perpendiculairement au sens d'écoulement de l'eau sur la tuile et il est disposé à distance de la protubérance de fixation (43 ; 53).
